Europäisches Patentamt

European Patent Office

Office européen des brevets

(19)

(11) **EP 0 802 439 B1**

(12) **FASCICULE DE BREVET EUROPEEN**

(45) Date de publication et mention
de la délivrance du brevet:
**31.07.2002 Bulletin 2002/31**

(51) Int Cl.7: **G02B 26/08**, G02B 26/10

(21) Numéro de dépôt: **97400857.5**

(22) Date de dépôt: **16.04.1997**

(54) **Microdispositif optomécanique, et application à un microdéflecteur optomécanique**

Optomechanische Mikrovorrichtung und ihre optomechanischen Anwendung in einem
Mikro-Strahlablenker

Optomechanical microdevice and optomechanical microdeflector using the same

(84) Etats contractants désignés:
**CH DE FR GB IT LI**

(30) Priorité: **18.04.1996 FR 9604861**

(43) Date de publication de la demande:
**22.10.1997 Bulletin 1997/43**

(73) Titulaire: **COMMISSARIAT A L'ENERGIE
ATOMIQUE
75015 Paris (FR)**

(72) Inventeur: **Labeye, Pierre
38000 Grenoble (FR)**

(74) Mandataire: **Moutard, Pascal Jean
Brevatome,
3, Rue du Docteur Lancereaux
75008 Paris (FR)**

(56) Documents cités:
**EP-A- 0 742 459**      **US-A- 5 059 008**
**US-A- 5 097 354**      **US-A- 5 392 157**

- **OPTICAL ENGINEERING, vol. 33, no. 11, 1
  Novembre 1994, pages 3505-3517, XP000475094
  MOTAMEDI M E:
  "MICRO-OPTO-ELECTRO-MECHANICAL
  SYSTEMS"**
- **OPTICAL ENGINEERING, vol. 33, no. 11, 1
  Novembre 1994, pages 3616-3623, XP000475105
  MOTAMEDI M E ET AL: "MINIATURIZED
  MICRO-OPTICAL SCANNERS"**
- **PATENT ABSTRACTS OF JAPAN vol. 009, no.
  190 (P-378), 7 Août 1985 & JP 60 057546 A (SUWA
  SEIKOSHA KK), 3 Avril 1985,**
- **OPTICAL ENGINEERING, vol. 32, no. 11, 1
  Novembre 1993, pages 2665-2670, XP000413673
  WATSON E A: "ANALYSIS OF BEAM STEERING
  WITH DECONTERED MICROLENS ARRAYS"**
- **PROCEEDINGS OF THE SPIE: DESIGN
  MODELLING AND CONTROL OF LASER BEAM
  OPTICS, vol. 1625, 21 - 23 Janvier 1992, LOS
  ANGELES, CA, US, pages 78-83, XP000614012
  MILSTER T D ET AL: "Modelling and
  Measurment of a Micro-Optic Beam Deflector"**

## Description

Domaine technique

L'invention se rapporte au domaine des composants microoptiques et des microtechnologies, notamment au domaine des microdéflecteurs optomécaniques, en vue de la fabrication collective de microsystèmes compacts.

En particulier, l'invention peut intervenir dans des systèmes très variés, tels que les microtélémètres optiques (microlidars) pour la détection d'obstacle, les systèmes de communication et d'interconnexion optique, les systèmes de stockage optique de l'information, les capteurs optiques, les systèmes d'impression optique (marquage laser, imprimantes, ...).

Selon un autre aspect, l'invention vise les applications de balayage ou de déflexion, à une dimension, d'un faisceau lumineux issu d'une source de rayonnement proche, à l'aide d'un système d'une ou de plusieurs microlentilles, le déplacement d'au moins une de ces microlentilles étant commandé par la flexion d'un bras de fixation.

Etat de la technique

On connaît différents types de systèmes intégrés ou hybridés, miniaturisés, utilisant différents mécanismes ou composants pour la déflexion d'un faisceau optique.

Un premier système comporte un ou plusieurs miroirs tournants ou oscillants. La réflexion d'un faisceau sur un miroir en rotation permet d'atteindre des grandes vitesses de balayage, mais ce type de système est souvent très sensible aux accélérations, ce qui pose problème en particulier dans des applications à des télémètres lasers embarqués.

Certains dispositifs de déflexion mettent en oeuvre des réseaux de microlentilles, tels que par exemple décrits dans l'article de E.A. WATSON intitulé "Analysis of beam steering with decentered microlens array", paru dans Optical Engineering, Novembre 1993, vol.32, n°11, pages 2665-2670, ainsi que dans l'article de T.D. MILSTER et al. paru dans SPIE, vol. 1625, "Design, Modeling and control of Laser Beam Optics", 1992, pages 78-83. Dans ces systèmes, on utilise la déviation provoquée par un désalignement de l'axe optique d'un système mobile de microlentilles ou de réseaux de microlentilles. Ce type de dispositif ne permet pas de réaliser un microdéflecteur avec un degré d'intégration élevé.

La plupart des systèmes microdéflecteurs de lumière utilisent généralement des éléments piézoélectriques pour commander le mouvement des parties mobiles. Ceci entraîne qu'ils ont souvent un volume important, et qu'ils sont alors limités aux basses fréquences. D'autre part, les éléments piézoélectriques nécessitent des tensions de commande très élevées (environ 1000 volts), et il est là aussi difficile d'atteindre des fréquences élevées sans consommer énormément d'énergie électrique. Un autre inconvénient des hautes tensions réside dans le coût des alimentations électriques difficilement miniaturisables.

Un autre système a été décrit dans la demande de brevet français FR-A-95 05652. Dans ce document, il est décrit un dispositif de microbalayage à base de microlentilles et de poutres électrostatiques intégrées sur un substrat. L'axe de la microlentille est perpendiculaire au substrat sur lequel elle est fabriquée. Le dispositif présenté dans ce document est avantageux pour le cas où l'on cherche à réaliser le microbalayage d'un faisceau suivant deux directions. Par contre, dans le cas où l'on cherche à réaliser le microbalayage d'un faisceau dans une seule direction, il se pose le problème de trouver un dispositif réalisable plus simplement, et permettant d'aboutir à un système de plus faible coût. En outre, la technique décrite dans le document FR-A-95 05652 ne permet pas de réaliser des lentilles de n'importe quelle forme, et en particulier des lentilles de très petite longueur focale, permettant d'obtenir des angles de balayage plus importants, ou, pour des angles de balayage équivalents, des tensions de commande plus faibles. Enfin, ce dispositif de la demande FR-A-95 05652 permet d'empiler des lentilles suivant un axe, mais nécessite pour cela de croiser deux micropoutres à 90° sur deux niveaux de technologie. Or, il est parfois nécessaire de déplacer solidairement un empilement de microlentilles.

Le document US-5 097 354 décrit un dispositif hybride comportant une source ponctuelle, une lentille et un élément mécanique apte à déplacer la lentille ou la source. Ce dispositif nécessite un assemblage de l'élément mécanique sur un support de la source ponctuelle, et de la lentille sur l'élément mécanique. Le système optique doit être rapporté avec une grande précision de positionnement sur la partie mécanique. Ce type de dispositif, dans lequel une lentille est rapportée sur une structure mécanique, est de type "hybride", nécessite des étapes d'alignement et d'assemblage, et n'est pas compatible avec des méthodes de fabrication collective.

Exposé de l'invention

L'invention vise à résoudre ces problèmes et propose un micro-dispositif optomécanique, comportant :

- un substrat définissant un plan x,y du dispositif,
- au moins une première lentille réalisée dans le substrat, mobile dans le plan x, y du dispositif et apte à défléchir un faisceau lumineux, dans ce même plan, l'une au moins des premières lentilles étant une lentille cylindrique, l'axe de symétrie cylindrique étant perpendiculaire au plan x, y du dispositif,
- au moins un bras de fixation, également réalisé dans le substrat, reliant ladite première lentille au substrat, l'extrémité du bras reliée à cette première lentille pouvant se déplacer dans le plan x, y du dispositif.

Les lentilles réalisées dans cette invention ont au moins un axe optique (appelé aussi axe focal) dans le plan du substrat, (ou plan du microdispositif) ou dans un plan parallèle à celui du substrat. Comme, en outre, la structure du microdispositif selon l'invention est compatible avec une réalisation par des technologies de photolithographie et de gravure, la forme des dioptres de la microlentille n'est absolument pas limitée : ceux-ci peuvent être de n'importe quelle forme et en particulier cylindriques. Dans ce dernier cas, la lentille présente un axe de symétrie cylindrique perpendiculaire au plan du microdispositif. La section d'un dioptre, dans un plan perpendiculaire à l'axe de symétrie cylindrique, peut être alors circulaire, conique ou quadrique ou de n'importe quelle forme.

La structure du dispositif selon l'invention est compatible avec des méthodes de fabrication collective, par exemple des méthodes de gravure et de photolithographie par masquage. En particulier, lorsque la lentille est de forme cylindrique, il est possible de réaliser l'optique, les bras de maintien déformables, et éventuellement les peignes électrostatiques en une seule étape de gravure : la, ou les, lentille(s) mobile(s) est, ou sont, alors réalisée(s) dans la partie fixe, de même que le, ou les, bras de fixation. On obtient alors un dispositif présentant une très grande intégration (de dimension très petite), qui est de meilleure tenue mécanique que les dispositifs mettant en oeuvre des pièces rapportées, et de réalisation plus simple, donc moins coûteuse, que les dispositifs non compatibles avec des méthodes de fabrication collectives. Enfin, un tel dispositif ne pose pas de problème d'alignement. Au contraire, les systèmes hybrides de l'art antérieur nécessitent des étapes d'alignement et d'assemblage, et sont généralement plus volumineux.

Aucune des structures de l'art antérieur ne permet de réaliser un microdispositif dans lequel la lentille est réalisée dans la structure mécanique, et qui présente un axe optique dans le plan du microdispositif. Ceci est rendu possible, selon la présente invention, par la réalisation d'une lentille de section cylindrique.

Le fait de pouvoir réaliser toute géométrie de lentilles cylindriques permet également d'obtenir des lentilles parfaitement stigmatiques, même pour de très grandes ouvertures de faisceau. Il n'y a donc pas de limitation, ni en terme de focale, ni en terme d'ouverture.

Les focales réalisées pouvant être plus petites que celles des dispositifs de l'art antérieur, la déflexion du faisceau optique pourra, pour un déplacement donné, être plus grande. Réciproquement, une déflexion donnée pourra être réalisée avec des déplacements plus petits que ceux des dispositifs de l'art antérieur, et donc avec des énergies de commande plus faibles.

En outre, la lentille peut être une lentille divergente.

Le microdispositif optomécanique selon l'invention peut également comporter au moins une seconde lentille, située sur le trajet du faisceau lumineux incident. Cette seconde lentille peut être fixe, liée à la partie fixe du microdispositif. Ce peut être aussi une lentille mobile, également apte à défléchir le faisceau lumineux dans le plan du microdispositif, et également reliée par au moins un bras de fixation à la partie fixe, une partie de ce bras pouvant se déplacer, et déplacer cette seconde lentille mobile, dans le plan du microdispositif.

Dans le cas où le faisceau à défléchir est très large, il est possible de réaliser un système avec N premières lentilles mobiles disposées côte à côte. De même, le microdispositif peut comporter N secondes lentilles fixes ou mobiles, disposées côte à côte dans le plan du microdispositif. Il est alors possible de réaliser des lentilles de très courte focale, donc permettant une déflexion importante avec de petits déplacements.

Pour réaliser des lentilles de très courte focale ou pour éviter les problèmes d'aberrations optiques, on peut aussi "empiler" N premières lentilles mobiles, suivant un axe compris dans le plan du microdispositif. Là encore, on peut obtenir des déflexions importantes avec de très faibles déplacements.

Dans le cas où l'on souhaite réduire la sensibilité de la partie mobile à l'accélération, la masse de la partie optique du microdispositif peut être réduite en utilisant une lentille de Fresnel.

Le microdispositif selon l'invention est très bien adapté pour la déflexion d'un faisceau issu d'un guide optique ou d'une fibre optique.

En particulier, la partie fixe du microdispositif peut en outre comporter des moyens pour diriger un faisceau lumineux en direction de la, ou d'une, première lentille mobile, ou de la, ou d'une, seconde lentille.

Ces moyens peuvent comporter un microguide optique intégré dans la partie fixe, présentant une extrémité de sortie située en regard de la (ou d'une) première lentille mobile, ou de la (ou d'une) seconde lentille.

Selon une variante, ces moyens peuvent comporter une fibre optique fixée à la partie fixe du dispositif, et dont une extrémité de sortie est située en regard de. la (ou d'une) première lentille mobile, ou de la (ou d'une) seconde lentille.

Enfin, un microlaser peut être fixé dans la partie fixe, de telle sorte que le faisceau laser soit émis en direction de la (ou d'une) première lentille mobile, ou de la (ou d'une) seconde lentille. Un tel microdispositif présente un degré d'intégration très élevé.

Le bras de fixation reliant la lentille mobile à la partie fixe du dispositif peut présenter deux extrémités reliées à la partie fixe du microdispositif, et une partie intermédiaire à laquelle est reliée la lentille, cette partie intermédiaire présentant une souplesse suffisante pour permettre la mobilité de la lentille dans le plan du micro-

dispositif. Une telle structure permet de rigidifier l'ensemble du microdispositif.

Des moyens de commande de déplacement du bras de fixation et de la lentille mobile peuvent être prévus, par exemple du type électrostatique ou électromagnétique. Selon une variante, ces moyens de commande peuvent comporter un peigne électrostatique.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B représentent deux variantes d'un premier mode de réalisation de l'invention,
- la figure 2 représente un autre mode de réalisation de l'invention, avec guide optique,
- la figure 3 représente un mode de réalisation de l'invention, avec microlaser intégré,
- la figure 4 représente un mode de réalisation de l'invention, avec une lentille mobile et une lentille fixe,
- les figures 5 et 6 représentent deux variantes d'un mode de réalisation de l'invention, avec deux lentilles mobiles,
- la figure 7 représente un mode de réalisation de l'invention avec des lentilles mobiles disposées côte à côte, et des lentilles fixes disposées côte à côte,
- la figure 8 représente un mode de réalisation de l'invention avec deux lentilles mobiles empilées, et une lentille fixe,
- la figure 9 est un mode de réalisation de l'invention, avec une lentille mobile, une lentille fixe, et un peigne électrostatique,
- la figure 10 représente un mode de réalisation de l'invention, avec un bras dont les extrémités sont fixes et dont la partie intermédiaire est mobile,
- la figure 11 représente un mode de réalisation de l'invention avec une lentille mobile divergente,
- la figure 12 est un exemple de lentille avec deux dioptres sphériques.

Description détaillée de modes de réalisation de l'invention

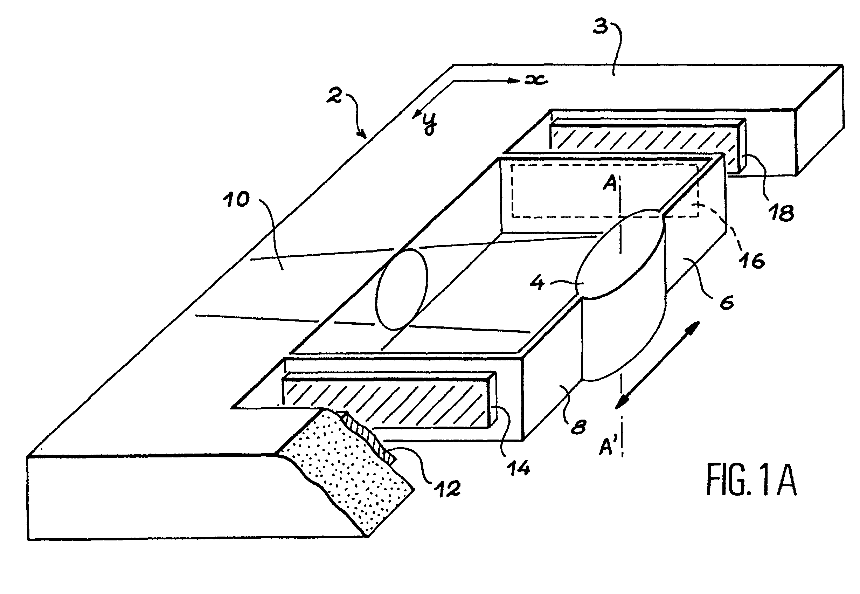

Un premier mode de réalisation de l'invention est illustré sur la figure 1A. Le microdispositif comporte un substrat, ou partie fixe, 2 et une lentille mobile 4. Le substrat, ou sa surface 3, définit un plan xy, qui sera appelé par la suite plan du microdispositif. La microlentille 4 peut se déplacer selon la direction y, et, par conséquent dans le plan, ou dans une direction parallèle au plan, du microdispositif. Elle est reliée par des bras 6, 8 à la partie fixe 2. Sous l'action d'une accélération suivant la direction y, ou d'une force imposée par une commande extérieure, les bras 6, 8 peuvent se déplacer, et permettre ainsi un déplacement de la microlentille 4 selon la direction y. En fait, le déplacement des bras correspond à leur fléchissement, sous l'action d'une accélération ou d'une force extérieure.

Lorsqu'un point source est situé au point focal d'une lentille convergente, le faisceau est collimaté par la lentille dans une direction parallèle à son axe optique; Lorsque la lentille est déplacée transversalement d'une distance d, le faisceau est alors collimaté suivant une direction faisant avec la direction précédente un angle

$$\alpha = \mathrm{Arctg}\left(\frac{d}{f}\right).$$

Des moyens 10 tels qu'un microguide optique sont par ailleurs prévus pour introduire un faisceau 5 suivant la direction x, ou suivant une direction parallèle à la direction x, en direction de la microlentille 4. Le déplacement de la microlentille suivant l'axe y permettra de défléchir ce faisceau lumineux dans le plan du microdispositif, ou dans un plan parallèle au plan du microdispositif. La lentille est représentée cylindrique sur la figure 1A. Elle présente un axe AA' de symétrie cylindrique, perpendiculaire au plan xy du microdispositif. Chaque dioptre présente une courbure finie dans le plan xy, ou dans un plan parallèle à xy, mais pas de courbure dans un plan perpendiculaire à xy.

Une lentille délimitée par des dioptres sphériques peut également être mise en oeuvre, l'axe focal de la lentille étant alors parallèle à l'axe x.

Deux bras de fixation ont été représentés. En fait, le dispositif peut également fonctionner avec un seul bras de fixation, par exemple le bras 6. Pour des raisons de symétrie et de stabilité, le dispositif avec deux bras 6, 8 disposés de part et d'autre de la lentille 4 est préférable. Deux bras permettent en outre un déplacement linéaire de la microlentille.

Dans le cas d'un microdéflecteur, des moyens de commande du déplacement des bras 6, 8, et donc de la lentille 4, peuvent être prévus. Ces moyens peuvent être par exemple, comme illustré sur la figure 1A, des moyens électrostatiques : des électrodes de commande 12, 14, 16, 18 peuvent être déposées sur les parties latérales des bras 6, 8 et sur la partie fixe du dispositif. Ces électrodes sont par ailleurs reliées à des moyens de mise sous tension, non représentés sur la figure. L'application d'une tension à deux électrodes 12, 14, se faisant face, entraîne un déplacement de l'ensemble selon la direction y. D'autres moyens de commande peuvent être prévus, en particulier des moyens électromagnétiques. Dans ce cas, un champ magnétique B est dirigé perpendiculairement au plan du microdispositif. Des spires le long des bras 6, 8 sont alimentées en courant par une source d'alimentation électrique. Le champ magnétique permet d'engendrer une force $F_L$ de Laplace qui entraîne la partie mobile du microdispositif en mouvement selon l'axe y. D'autres détails, notamment de réalisation, d'un tel dispositif de commande électromagnétique sont donnés dans le document FR-2 660 444.

Dans le cas d'un dispositif de commande électrostatique, on rappellera que la force d'attraction électrostatique générée par une tension V appliquée entre deux électrodes 12, 14 positionnées l'une en face de l'autre, est donnée par :

$$F = 1/2 \, \varepsilon_0 S(V/e)^2 \qquad (1)$$

où F est la force générée, $\varepsilon_0$ la permittivité du milieu interélectrodes, S la surface des électrodes et e la distance interélectrodes.

Réciproquement, pour un bras de longueur L, de moment d'inertie I, réalisé dans un matériau de module d'Young E, le déplacement d induit par une force F répartie le long de la poutre (bras), est donné par :

$$d = \frac{FL^3}{8EI} \qquad (2).$$

En fonction des déplacements à effectuer, l'homme du métier pourra déduire des égalités (1) et (2) le dimensionnement des bras et du dispositif de commande électrostatique à mettre en oeuvre. L'égalité (2) est applicable quel que soit le moyen de commande utilisé.

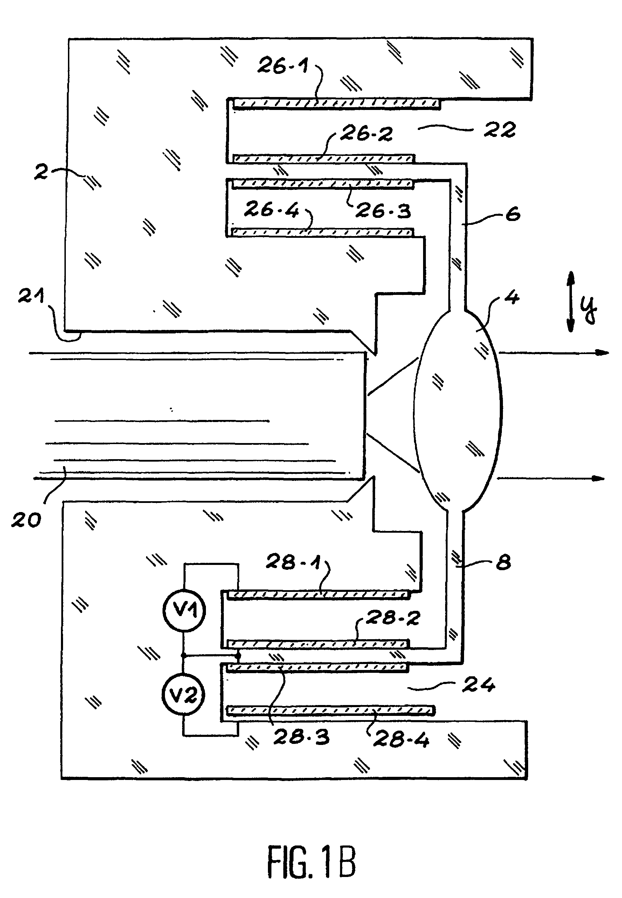

La figure 1B illustre une variante du dispositif décrit ci-dessus en liaison avec la figure 1A. Le microguide optique 10 est remplacé par une fibre optique 20 qui est incorporée dans un sillon 21 prévu dans la partie fixe 2 du microdispositif. Le sillon 21 permet en outre un très bon positionnement relatif de la fibre 20 par rapport à la lentille 4. Les bras 6, 8, du côté où ils se rattachent à la partie fixe du microdispositif, pénètrent dans une ouverture 22, 24 de cette partie fixe. Des électrodes 26-2, 26-3 et 28-2, 28-3 peuvent donc être déposées de part et d'autre des bras 6, 8, chacune de ces électrodes faisant face à une électrode de commande 26-1, 26-4 et 28-1, 28-4 déposée sur la partie fixe. Une tension peut être établie entre chaque paire d'électrodes se faisant face, ce qui permet de diminuer la tension à appliquer à chaque paire d'électrodes pour un déplacement donné de la microlentille 4 le long de l'axe y. Les moyens d'alimentation en tension, à utiliser, sont donc moins importants.

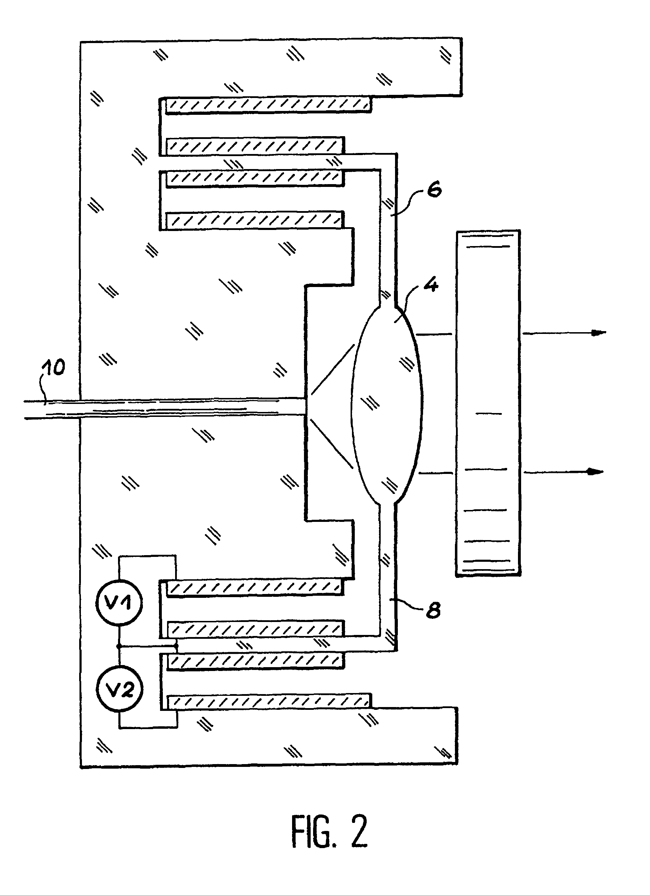

Le dispositif illustré sur la figure 2 comporte, comme dans le cas du premier mode de réalisation décrit ci-dessus, un guide optique 10 qui permet de diriger la lumière vers une lentille cylindrique 4. Les moyens de commande des bras 6, 8 sont équivalents à ceux décrits ci-dessus en liaison avec la figure 1B. En sortie du dispositif, une lentille cylindrique 30, dont l'axe de symétrie cylindrique est dirigé perpendiculairement à celui de la lentille 4 (c'est-à-dire est dirigé dans le plan xy), permet de collimater le faisceau obtenu avec la lentille 4 suivant une deuxième direction, perpendiculaire au plan du microdispositif.

Les guides optiques qui ont été représentés sur les figures 1A et 2 sont des guides droits. Mais ils peuvent être incorporés à un schéma optique intégré complexe, par exemple à un interféromètre optique intégré. Dans le cas où il n'est pas nécessaire d'inclure des fonctions optiques intégrées, on peut utiliser, comme dans le cas de la figure 1B, une fibre optique 20 incorporée dans un sillon 21.

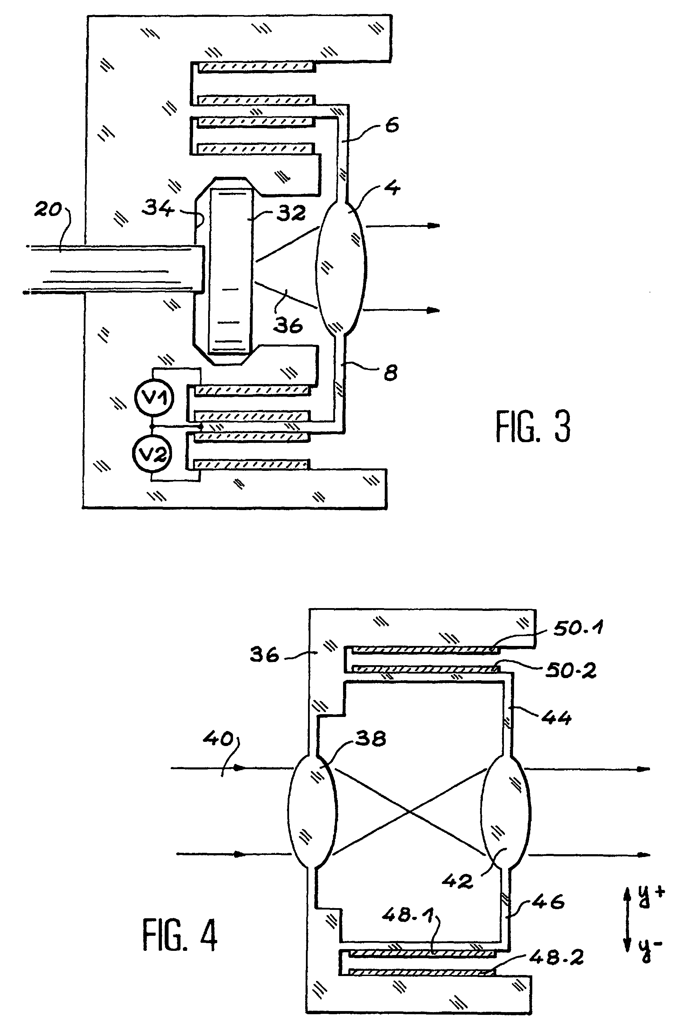

Dans le dispositif illustré sur la figure 3, une fibre optique 20 permet d'amener un faisceau de pompage à un microlaser 32 incorporé dans une cavité 34 de la partie fixe du microdispositif. Ce microlaser est disposé de manière à émettre un faisceau laser 36 en direction de la microlentille mobile 4, dont les déplacements seront par exemple commandés par des moyens électrostatiques le long des bras 6, 8. Un microlaser présente une structure constituée d'un empilement de multicouches. Le milieu actif laser est constitué par exemple par un matériau de faible épaisseur (entre 150 µm et 1 mm) et de petite dimension (quelques mm$^2$), sur lequel des miroirs diélectriques sont directement déposés, réalisant ainsi une cavité microlaser. Le milieu actif peut être pompé par une diode laser III-V qui est, dans le cadre de la présente invention, couplée au microlaser par la fibre optique 20. Les microlasers présentent la possibilité d'une fabrication collective utilisant les moyens de la microélectronique, ce qui autorise une production de masses à très faible coût. Par conséquent, un dispositif selon l'invention, en particulier un microdéflecteur, reste de structure extrêmement compacte, et de coût relativement faible. Un microlaser est par exemple décrit dans l'article de N. MERMILLIOD et al., intitulé "LaMgAl$_{11}$O$_{19}$:Nd microchip laser" paru dans Applied Physics Letters, vol. 59, n°27, pages 3516-3520 (1991).

Un autre type de microlaser, pouvant être utilisé dans le cadre de la présente invention, est décrit dans le document EP-A-0 653 824. Ce microlaser est à déclenchement passif et incorpore un absorbant saturable sous la forme d'une couche mince de matériau absorbant saturable directement déposée sur le milieu actif solide. Un procédé de réalisation d'un tel composant est également décrit dans ce document EP-A-0 653 824.

De la même manière, il est possible de prévoir une diode laser, incorporée par exemple dans une cavité du microdispositif, et disposé de manière à diriger le faisceau laser vers la lentille mobile du microdispositif.

La figure 4 représente un autre mode de réalisation du système de lentilles, dans un dispositif selon l'invention. La partie fixe 36 du dispositif comporte une lentille fixe 38, que traverse un faisceau incident 40. Le faisceau obtenu en sortie de la lentille 38 traverse ensuite une lentille mobile 42 reliée par des bras 44, 46 à la partie fixe 36. Le mouvement de déflexion est commandé par des électrodes 48-1, 48-2, 50-1, 50-2 disposées le long des bras et sur la partie fixe 36 du microdispositif. Si on souhaite défléchir un faisceau parallèle 40, on peut par exemple utiliser deux lentilles 38, 42 cylindriques, dont l'une est fixe et l'autre mobile. La lentille fixe permet de focaliser le faisceau parallèle et la lentille mobile recollimate le faisceau. Pour défléchir le faisceau vers le bas de la figure 4 (c'est-à-dire dans la direction y⁻), une tension est établie entre les électrodes 48-1 et 48-2. Pour défléchir le faisceau vers le haut de la figure 4 (c'est-à-dire dans la direction y⁺) une tension est établie entre les électrodes 50-1 et 50-2.

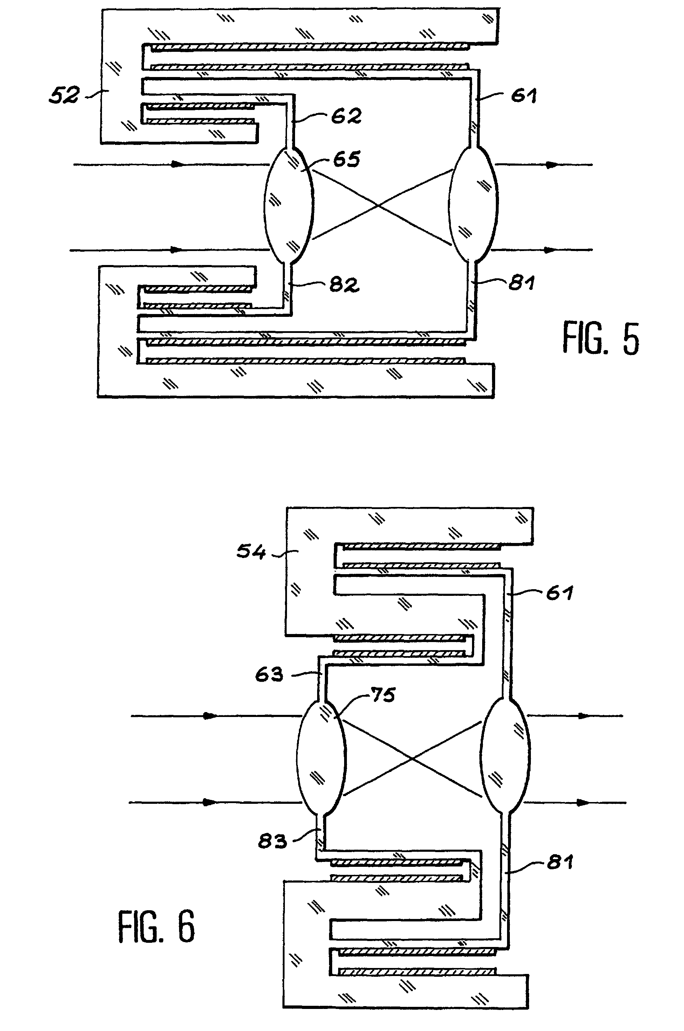

Afin d'obtenir une même déflexion, et dans le but de diminuer la tension de commande à appliquer aux électrodes, il est possible d'utiliser deux lentilles mobiles en cascade, au lieu d'une lentille fixe et d'une lentille mobile. Dans ce cas, afin d'obtenir le même déplacement relatif entre les deux lentilles, chacune des deux lentilles peut être déplacée de la demi-distance, chacune dans une direction opposée. Cette solution est illustrée sur les figures 5 et 6. Le cas de la figure 5 correspond à des poutres de commande 61, 62, 81, 82 reliées du même côté de la structure fixe 52. Dans le cas de la figure 6, les poutres de commande 61, 63 et 81, 83 sont reliées à des côtés opposés de la structure fixe 54 : on obtient ainsi un dispositif à deux lentilles mobiles imbriquées.

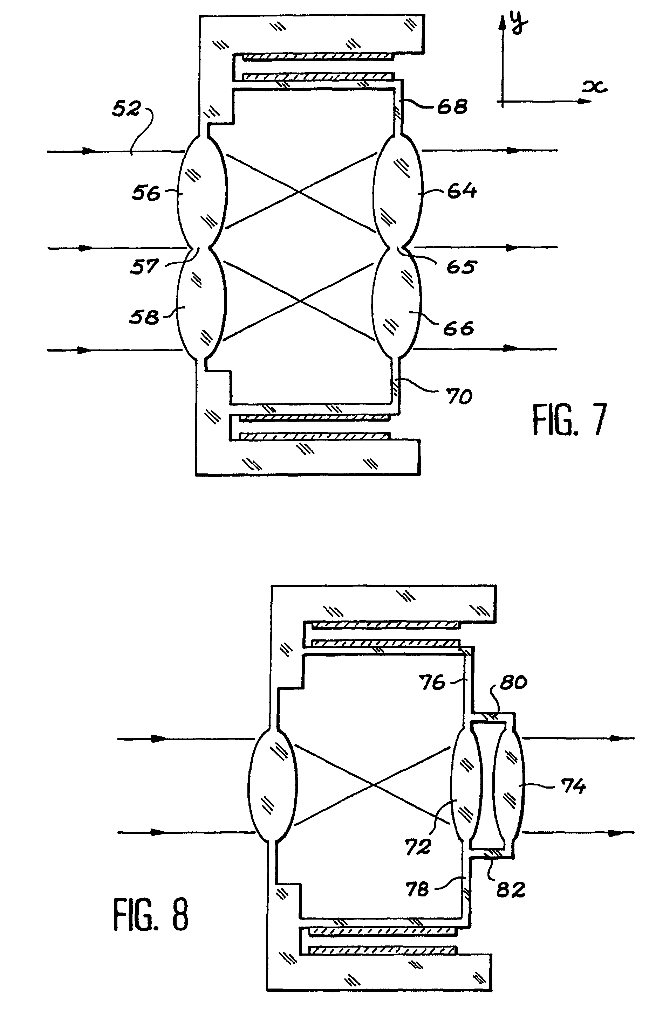

Dans le cas où le faisceau à défléchir est très large, il est possible de réaliser un système à plusieurs lentilles mises côte à côte. Un exemple de ce mode de réalisation est illustré sur la figure 7 pour des lentilles mobiles et fixes où celles-ci sont disposées côte à côte, suivant la direction y du plan du microdispositif. Sur cette figure, un faisceau incident 52 traverse une paire de lentilles fixes 56, 58 reliées par leurs parties latérales 57, puis une paire de lentilles mobiles 64, 66 reliées par leurs parties latérales 65. Chaque lentille mobile est reliée à un bras de fixation 68, 70 qui permet de déplacer l'ensemble des deux lentilles 64, 66. Avec ce dispositif, il est possible de réaliser des lentilles de très courte focale, donc permettant une déflexion importante avec de petits déplacements. Les lentilles 56, 58 et 64, 66 sont avantageusement réalisées au cours de la même étape. Le schéma de la figure 7 peut être généralisé à un nombre N quelconque de lentilles fixes et de lentilles mobiles mises côte à côte. De même, dans le cas où le dispositif ne comporte que des lentilles mobiles, et pas de lentille fixe, il est possible de réaliser un ensemble N de lentilles mobiles mises côte à côte selon une direction située dans le plan du microdispositif. On obtient ainsi un ensemble de lentilles disposées "en parallèle".

Le mode de réalisation de la figure 8 correspond à un empilement de lentilles mobiles 72, 74 selon un axe compris dans le, ou parallèle au, plan du microdispositif (l'axe x sur la figure 8). La première lentille 72 est reliée aux bras de fixation 76, 78, tandis que la seconde lentille mobile 74 est reliée par les bras 80, 82 aux bras 76, 78. Ce schéma peut être généralisé à un nombre N quelconque de lentilles mobiles, disposées suivant un axe du, ou parallèle au, plan du microdispositif. En empilant ainsi plusieurs lentilles, il est possible de réaliser de très courtes focales, donc des déflexions importantes avec de très faibles déplacements de la partie mobile.

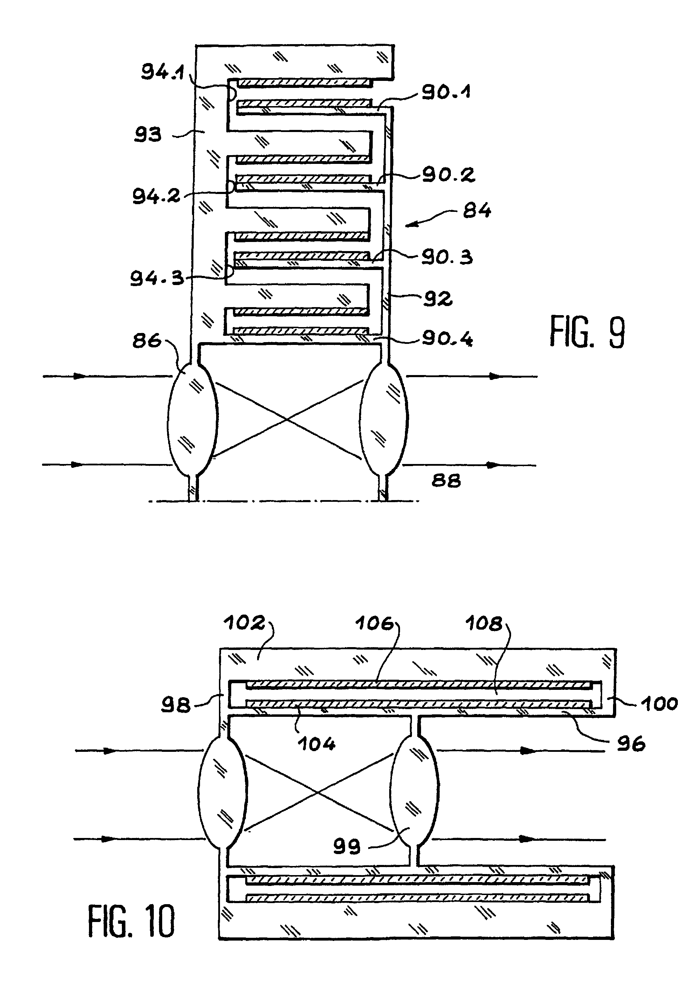

Afin de réduire la tension de commande à appliquer aux bras de fixation de la, ou des, lentilles mobiles, il est possible de mettre en oeuvre, comme illustré sur la figure 9, un peigne électrostatique 84 de commande. Sur cette figure, un seul peigne est représenté, un peigne similaire pouvant être disposé de l'autre côté du dispositif, par rapport aux lentilles fixes et mobiles 86, 88, dans le plan de la figure 9. Le peigne 84 est constitué d'une série de dents 90-1,..., 90-4 reliées à un bras principal 92. Les dents portent chacune des électrodes de commande, disposées par exemple de part et d'autre des bras 90-i (i=1-4). La partie fixe 93 du microdispositif présente des encoches 94-1, 94-2, 94-3 dans lesquelles sont insérées les dents 90-1, 90-2, 90-3 du peigne qui présentent une extrémité libre, la dent 90-4 étant quant à elle reliée à la partie fixe. Les parois intérieures des encoches du substrat peuvent être recouvertes de métallisations qui font face aux métallisations déposées sur les dents du peigne, chaque métallisation du substrat formant avec une métallisation correspondante d'une dent du peigne un condensateur de diélectrique et d'épaisseur variable. Sur la figure 9, seules quatre dents ont été représentées, mais l'enseignement de l'invention s'applique à un nombre quelconque N de dents.

Le, ou les, bras de fixation qui permettent de relier la lentille mobile à la partie fixe du microdispositif peuvent être conçus comme illustré sur la figure 10 : un bras 96 est lié par ses deux extrémités 98, 100, à la partie fixe 102 du microdispositif. La partie centrale, ou intermédiaire, de la poutre 96 est d'une souplesse permettant le déplacement de la lentille mobile 99 dans le plan du microdispositif. Des moyens de commande 104, 106 des déplacements de la partie intermédiaire du bras 96 et de la lentille mobile 99 sont prévus le long des parois d'une cavité 108 séparant la partie fixe 102 et le bras 96. Ces moyens peuvent être des métallisations permettant d'appliquer une force électrostatique, ou bien des moyens de commande électromagnétique. Le fait de relier les deux extrémités d'un bras de fixation à la partie fixe permet de rigidifier la structure dans son ensemble.

Les lentilles mobiles et/ou fixes ont été décrites jusqu'à présent comme pouvant être des lentilles limitées par des dioptres sphériques, ou cylindriques ou toute autre forme. Dans le cas de dioptres cylindriques, la section du dioptre par un plan parallèle au plan du microdispositif définit une courbe qui peut être une conique, par exemple une ellipse, une hyperbole ou une parabole, ou bien une quadrique. Dans ce dernier cas, la lentille permet une conjugaison des images parfaitement stigmatique, même pour de très grandes ouvertures de faisceau. De façon avantageuse, on peut prévoir plusieurs lentilles pour corriger les aberrations lorsque la déflexion est importante.

Dans le cas où l'on souhaite réduire la sensibilité de la partie mobile du dispositif, par rapport à l'accélération, il est possible de réduire la masse du système optique en utilisant une ou des lentilles de Fresnel, de préférence très minces. De telles lentilles sont par exemple décrites dans "Etude et réalisation de systèmes optiques convergents pour l'optique planaire", Thèse de Pierre Gidon, 20 Décembre 1983, Université Scientifique et Médicale de Grenoble.

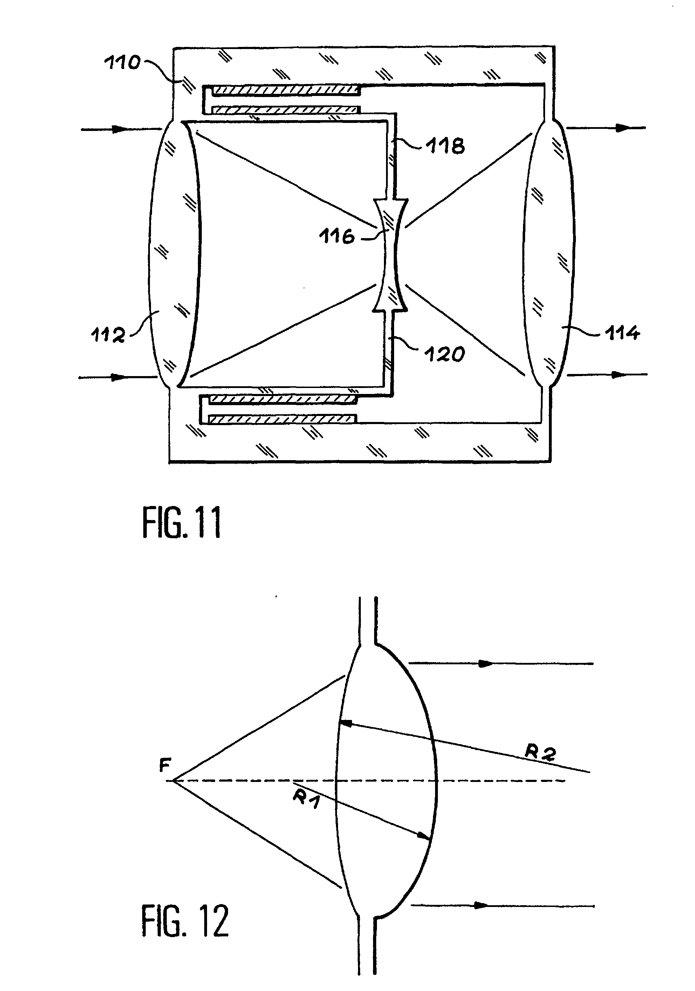

Les lentilles, et notamment la lentille mobile peuvent être des lentilles divergentes. Un dispositif incorporant une telle lentille divergente est illustré sur la figure 11 : ce dispositif comporte, outre un substrat fixe 110 du microdispositif, deux lentilles fixes 112, 114 disposées en entrée et en sortie du microdispositif. La partie mobile comporte essentiellement une lentille mobile 116, divergente, reliée par deux bras de fixation 118, 120 à la partie fixe 110. Ce type de dispositif peut être intéressant pour défléchir un faisceau de grand diamètre : plutôt que de déplacer une lentille convergente de gros diamètre, donc lourde, le faisceau peut être ainsi focalisé sur une, ou plusieurs, lentilles divergentes 116 plus petites.

Toutes les structures décrites ci-dessus en liaison avec les figures 4 à 11 peuvent également incorporer, dans la partie fixe du microdispositif, un guide optique, ou une fibre optique, ou un microlaser comme décrit en liaison avec les figures 1 à 3. Par exemple, le microdispositif de la figure 4 peut être muni, dans sa partie fixe, d'une cavité dans laquelle est inséré un microlaser, ainsi que d'un sillon pour y introduire une fibre optique transmettant le faisceau de pompage au microlaser.

Un exemple d'un procédé de réalisation d'un microdispositif selon l'invention va maintenant être décrit. On prendra l'exemple d'éléments réalisés en silice. Le matériau de départ est donc constitué par une couche épaisse (environ 50 μm) de silice, déposée sur un substrat, par exemple en silicium. Ce dépôt peut être réalisé par LPCVD ou par PECVD (CVD assisté plasma).

Un dépôt d'une couche de résine est ensuite effectué sur la couche de silice. Par une technique de photolithographie classique, on forme ensuite dans la résine des éléments ayant une forme correspondant à celle des lentilles fixes et mobiles ainsi qu'à celle des bras de fixation que l'on veut réaliser dans la couche de silice. L'étape suivante permet de graver les bras et les lentilles dans la couche de silice. Pour cette étape, on peut utiliser une technique de gravure ionique réactive (RIE) : les gaz (par exemple $CHF_3$ pour la silice, $O_2$ pour la résine) réagissent avec les matériaux à graver, pour former des composés volatils qui sont évacués par pompage. Le contrôle des proportions de ces gaz permet de choisir la sélectivité S de la gravure, qui est le rapport de vitesse de gravure du substrat et du masque en résine. On peut ainsi effectuer une gravure très verticale.

Les cavités 21 (figure 1B) et 34 (figure 3) peuvent être réalisées au cours de cette étape de gravure ionique réactive. Il en va de même pour le peigne électrostatique 84 (voir figure 9).

Une étape ultérieure de gravure isotrope de la couche de silicium permet de libérer les parties mobiles (microlentilles mobiles et bras de fixation) ayant la forme voulue. Cette forme peut être quelconque, et la technique décrite ci-dessus permet d'obtenir les différents composants déjà décrits en liaison avec les figures 1A à 11.

Il est également possible de réaliser la lentille mobile dans une couche constituée de dépôts de plusieurs matériaux ou par une couche dopée de façon graduelle ; ainsi on peut obtenir une lentille à gradient d'indice. A titre d'exemple, pour une lentille en silice on peut utiliser comme dopant du phosphore. La technique utilisée pour définir la géométrie de la lentille est par exemple une technique de gravure ionique réactive. La réalisation de lentilles à gradient d'indice est décrite par exemple dans le catalogue Melles Griot, Optics Guide 5, p. 20-58, 20-59, 20-60 (réalisation en couche mince par variation du dopage phosphore en cours de dépôt PECVM de silice).

Dans le cas où un guide 10 est prévu dans la structure fixe (comme sur la figure 1A), celui-ci est réalisé au cours de l'étape de dépôt de la couche, par exemple en silice, dans laquelle lentilles et bras de fixation doivent être gravés. Un procédé de réalisation du guide consiste alors à :

- déposer une première couche de silice,
- déposer une couche de silice dopée, sur cette première couche de silice,
- graver cette couche de silice dopée, suivant la forme que l'on veut donner au guide 10,
- déposer une seconde couche de silice.

La couche finale, obtenue par dépôt des première et seconde couches de silice peut ensuite être gravée, comme décrit plus haut, pour y réaliser lentilles et bras.

Les électrodes, pour les commandes électrostatiques, sont réalisées par évaporation sous incidence oblique, au travers d'un masque mécanique. Les métallisations obtenues sont ensuite reliées à des électrodes de commande.

Si une des lentilles à réaliser est du type lentille de Fresnel, on utilise le même procédé que décrit précédemment en modifiant simplement le motif du masque.

Un exemple de réalisation d'un microdispositif selon l'invention va maintenant être décrit. Les performances typiques de déflexion, d'un dispositif de microbalayage, sont de l'ordre de -10° à +10°. Si on considère un faisceau de diamètre Φ=100 μm, l'état de l'art permet de réaliser des microlentilles plan-convexes, dont l'épaisseur au centre est environ h=10 μm, et dont la focale f est donnée par :

$$f = \phi^2/8xh(n-1)$$

où n est l'indice de réfraction du matériau (on peut prendre n=1,5 pour la silice). Avec les valeurs données ci-dessus, on obtient donc : f=250 μm. Il faut donc engendrer un déplacement d de la lentille, qui sera de : d=f·tgθ=44 μm. Si on réalise par exemple une lentille avec 2 dioptres sphériques, ayant l'un et l'autre un rayon de courbure $R_1$ et $R_2$ (voir figure 12), la condition $R_2$=-6$R_1$ permet d'obtenir un minimum d'aberrations sphériques. En se donnant une focale de 100 μm, on obtient :

$$R_1 = (7(n-1)/6)f = 58,33 \ \mu m \ et \ R_2 = -6R_1 = -350 \ \mu m.$$

Le déplacement à engendrer est donc de f·tgθ=17,6 μm.

La valeur obtenue est nettement inférieure à la valeur de 44 μm, nécessaire pour obtenir les mêmes performances avec une microlentille plan-convexe selon l'art antérieur.

Enfin, en ce qui concerne les moyens permettant de commander le déplacement des bras de fixation de la lentille mobile, le dispositif de commande électrostatique est particulièrement intéressant. En effet, si l'on considère un bras de longueur L=2 mm, de largeur l=5 μm et d'épaisseur h, une électrode de métallisation étant déposée sur la surface S de longueur L et de hauteur h, et si l'on prend l'entrefer e (distance par rapport à la métallisation sur la partie fixe) égale à trois fois le déplacement d du bras, l'ensemble étant réalisé dans de la silice PECVD de module d'Young E=7.10^{10} Pa, la tension V pour générer le déplacement d est donnée par :

$$V = (12Ed^3l^3)/\varepsilon_0 L^4)^{1/2}$$

Pour un dispositif selon l'art antérieur, on obtient V=250 volts. Pour un dispositif selon l'invention, on obtient V=64 volts en supposant des électrodes sur chacun des deux bras. Le gain en tension est donc supérieur à 4, ce qui est très important pour des microdispositifs, puisqu'il est alors primordial de fournir des alimentations de petites tailles, donc ne pouvant délivrer que des tensions faibles ou moyennes.

D'une manière générale, un microdispositif selon l'invention a une taille de l'ordre de quelques μm x quelques μm x 0,5 mm

## Revendications

1. Microdispositif optomécanique comportant :

   - un substrat (2, 36, 52, 54, 92, 102, 110) définissant un plan x,y du dispositif,
   - au moins une première lentille (4, 42, 64, 66, 72, 74, 88, 99, 116) réalisée dans le substrat, mobile dans le plan x, y du dispositif et apte à défléchir un faisceau lumineux, dans ce même plan, l'une au moins des premières lentilles étant une lentille cylindrique, l'axe de symétrie cylindrique étant perpendiculaire au plan x, y du dispositif,
   - au moins un bras de fixation (6, 8, 44, 46, 61, 68, 70, 76, 78, 81, 96), également réalisé dans le substrat, reliant ladite première lentille au substrat, l'extrémité du bras reliée à cette première lentille pouvant se déplacer dans le plan x, y du dispositif.

2. Dispositif selon la revendication 1 comportant au moins une seconde lentille (38, 56, 58, 86, 112).

3. Dispositif selon la revendication 2, la seconde lentille (38, 56, 58, 86, 112) étant fixe par rapport au substrat.

4. Dispositif selon la revendication 2, la seconde lentille (65, 75) étant mobile par rapport au substrat, et également apte à défléchir un faisceau lumineux dans le plan du dispositif, et étant reliée par au moins un deuxième bras de fixation (62, 63, 82, 83) au substrat, l'extrémité du deuxième bras reliée à une seconde lentille pouvant se déplacer dans le plan du dispositif.

5. Dispositif selon l'une des revendications précédentes comportant N premières lentilles (64, 66) disposées côte à côte suivant la direction y du plan x,y du dispositif, mobiles par rapport au substrat.

6. Dispositif selon l'une des revendications 3 ou 5 comportant N' secondes lentilles (56, 58), disposées côte à côte dans le plan x, y du dispositif suivant la direction y de ce plan.

7. Dispositif selon l'une des revendications 1 à 4 comportant N premières lentilles (72, 74) mobiles par rapport au substrat disposées en empilement, suivant l'axe x du plan x, y du dispositif.

8. Dispositif selon l'une des revendications précédentes, au moins l'une des premières lentilles mobiles étant une lentille de Fresnel.

9. Dispositif selon l'une des revendications 1 à 8, au moins l'une des premières ou secondes lentilles (116) étant une lentille divergente.

10. Dispositif selon l'une des revendications 1 à 9, la lentille cylindrique présentant un dioptre dont la section, dans un plan perpendiculaire à l'axe de symétrie cylindrique, est circulaire, d'équation conique ou quadrique.

11. Dispositif selon l'une des revendications 1 à 10, le substrat du dispositif comportant des moyens (10, 20, 21) pour diriger un faisceau lumineux en direction de la, ou d'une, première lentille mobile ou de la, ou d'une, seconde lentille.

12. Dispositif selon la revendication 11, les moyens pour diriger un faisceau lumineux comportant un microguide optique (10) intégré dans le substrat, présentant une extrémité de sortie située en regard de la, ou d'une, première lentille mobile (4) ou de la, ou d'une, seconde lentille.

13. Dispositif selon la revendication 11, les moyens pour diriger un faisceau lumineux comportant une fibre optique (20) fixée au substrat, présentant une extrémité de sortie située en regard de la, ou d'une, première lentille mobile ou de la, ou d'une, seconde lentille.

14. Dispositif selon l'une des revendications 1 à 10, une diode laser ou un microlaser (32) étant fixé dans le substrat, de manière à ce que le faisceau laser soit émis en direction de la, ou d'une, première lentille mobile, ou de la, ou d'une, seconde lentille.

15. Dispositif selon l'une des revendications 1 à 13, le bras de fixation (96) présentant deux extrémités (98, 100) reliées au substrat (102) du dispositif, et une partie intermédiaire, à laquelle est reliée au moins l'une des lentilles mobiles (99), cette partie intermédiaire présentant une souplesse suffisante pour permettre la mobilité de la lentille dans le plan du dispositif.

16. Dispositif selon l'une des revendications 1 à 15 comportant des moyens (26-1, 26-2, 26-3, 26-4, 28-1, 28-2, 28-3, 28-4, 84) de commande de déplacements du bras de fixation d'au moins une des lentilles mobiles.

17. Dispositif selon la revendication 16, les moyens de commande étant du type électrostatique ou électromagnétiques.

18. Dispositif selon la revendication 16, les moyens de commande comportant un peigne électrostatique (84).

**Patentansprüche**

1. Optomechanische Mikrovorrichtung, umfassend:

   - ein Substrat (2, 36, 52, 54, 92, 102, 110), das eine x,y-Ebene der Vorrichtung definiert,
   - wenigstens eine erste Linse (4, 42, 64, 66, 72, 74, 88, 99, 116), realisiert in dem Substrat, beweglich in der x,y-Ebene der Vorrichtung und fähig, einen Lichtstrahl in dieser selben Ebene abzulenken, wobei wenigstens eine der ersten Linsen eine zylindrische Linse ist und die Zylinder-Symmetrieachse senkrecht ist zu der x,y-Ebene der Vorrichtung,
   - wenigstens einen Befestigungsarm (6, 8, 44, 46, 61, 68, 70, 76, 78, 81, 96), ebenfalls in dem Substrat realisiert, der die genannte erste Linse mit dem Substrat verbindet, wobei das Ende des mit dieser ersten Linse verbundenen Arms sich in der x,y-Ebene der Vorrichtung bewegen kann.

2. Vorrichtung nach Anspruch 1 mit wenigstens einer zweiten Linse (38, 56, 58, 86, 112).

3. Vorrichtung nach Anspruch 2, wobei die zweite Linse (38, 56, 58, 86, 112) in Bezug auf das Substrat feststehend ist.

4. Vorrichtung nach Anspruch 2, wobei die zweite Linse (65, 75) in Bezug auf das Substrat beweglich ist und ebenfalls fähig ist, einen Lichtstrahl in der Ebene der Vorrichtung abzulenken, und durch wenigstens einen zweiten Befestigungsarm (62, 63, 82, 83) mit dem Substrat verbunden ist, wobei das Ende des mit einer zweiten Linse verbundenen zweiten Arms sich in der Ebene der Vorrichtung bewegen kann.

5. Vorrichtung nach einem der vorangehenden Ansprüche, N erste Linsen (64, 66) umfassend, Seite an Seite angeordnet in der y-Richtung der x,y-Ebene der Vorrichtung und beweglich in Bezug auf das Substrat.

6. Vorrichtung nach einem der Ansprüche 3 oder 5, N' zweite Linsen (56, 58) umfassend, Seite an Seite in der x,y-Ebene der Vorrichtung entsprechend der y-Richtung dieser Ebene angeordnet.

7. Vorrichtung nach einem der Ansprüche 1 bis 4 mit N ersten Linsen (72, 74), beweglich in Bezug auf das Substrat und stapelartig angeordnet entsprechend der x-Achse der x,y-Ebene der Vorrichtung.

8. Vorrichtung nach einem der vorangehenden Ansprüche, wobei wenigstens eine der ersten beweglichen Linsen eine Fresnel-Linse ist.

**9.** Vorrichtung nach einem der Ansprüche 1 bis 8, wobei wenigstens eine der ersten oder zweiten Linsen (116) eine Zerstreuungslinse ist.

**10.** Vorrichtung nach einem der Ansprüche 1 bis 9, wobei die zylindrische Linse einen Diopter darstellt, mit einem in einer zu der Zylindersymmetrieachse senkrechten Ebene kreisförmigen Querschnitt mit konischer oder quadratischer Gleichung.

**11.** Vorrichtung nach einem der Ansprüche 1 bis 10, wobei das Substrat der Vorrichtung Einrichtungen (10, 20, 21) umfasst, um einen Lichtstrahl in Richtung der, oder einer, ersten beweglichen Linse oder der, oder einer, zweiten Linse zu leiten.

**12.** Vorrichtung nach Anspruch 11, wobei die Einrichtungen zum Leiten eines Lichtstrahls einen optischen Mikroleiter (10) umfassen, integriert in das Substrat, mit einem Austrittsende, das der, oder einer, ersten beweglichen Linse (4) oder der, oder einer, zweiten Linse gegenübersteht.

**13.** Vorrichtung nach Anspruch 11, wobei die Einrichtungen zum Leiten eines Lichtstrahls eine am Substrat befestigte optische Faser (20) umfassen, die ein Austrittsende umfasst, das der, oder einer, ersten beweglichen Linse oder der, oder einer, zweiten Linse gegenübersteht.

**14.** Vorrichtung nach einem der Ansprüche 1 bis 10, wobei eine Laserdiode oder ein Mikrolaser (32) in dem Substrat so befestigt ist, dass der Laserstrahl in Richtung der, oder einer, ersten beweglichen Linse oder der, oder einer, zweiten Linse abgestrahlt wird.

**15.** Vorrichtung nach einem der Ansprüche 1 bis 13, bei der der Befestigungsarm (96) zwei Enden (98, 100), die mit dem Substrat (102) der Vorrichtung verbunden sind, und einen Zwischenteil umfasst, mit dem wenigstens eine der beweglichen Linsen (99) verbunden ist, wobei dieser Zwischenteil eine ausreichende Nachgiebigkeit aufweist, um die Beweglichkeit der Linse in der Ebene der Vorrichtung zu ermöglichen.

**16.** Vorrichtung nach einem der Ansprüche 1 bis 15, die Einrichtungen (26-1, 26-2, 26-3, 26-4, 28-1, 28-2, 28-3, 28-4, 84) zum Steuern der Bewegungen des Befestigungsarms wenigstens einer der beweglichen Linsen umfasst.

**17.** Vorrichtung nach Anspruch 16, bei der die Steuereinrichtungen vom elektrostatischen oder elektromagnetischen Typ sind.

**18.** Vorrichtung nach Anspruch 16, bei der die Steuereinrichtungen einen elektrostatischen Kamm (84) umfassen.

**Claims**

**1.** Optomechanical microdevice comprising:

- a substrate (2, 36, 52, 54, 92, 102, 110) defining a plane (x, y) of the device,
- at least one first lens (4, 42, 64, 66, 72, 74, 88, 99, 1116) implemented in the substrate and mobile in the plane (x, y) of the device and able to deflect a light beam in said same plane, at least one of the first lens being a cylindrical lens, the cylindrical symmetry axis being perpendicular to the plane (x, y) of the device,
- at least one fastening arm (6, 8, 44, 46, 61, 68, 70, 76, 78, 81, 96), also implementing in the substrate, connecting said first lens to the substrate, the end of the arm connected to said first lens being displaceable in the plane (x, y) of the device.

**2.** Device according to claim 1 comprising at least one second lens (38, 56, 58, 86, 112).

**3.** Device according to claim 2, the second lens (38, 56, 58, 86, 112) being fixed relative to the substrate.

**4.** Device according to claim 2, the second lens (65, 75) being mobile relative to the substrate and is also able to deflect a light beam in the plane of the device and is connected by at least one second fastening arm (62, 63, 82, 83) to the substrate, the end of the second arm connected to a second lens being displaceable in the plane of the device.

**5.** Device according to one of the preceding claims having N first lenses (64, 66) arranged side by side in direction (y) of the plane (x, y) of the device and mobile with respect to the substrate.

**6.** Device according to one of the claims 3 or 5 having N' second lenses (56, 58) arranged side by side in the plane (x, y) of the device in the direction (y) of said plane.

**7.** Device according to one of the claims 1 to 4 having N first lens (72, 74) mobile with respect to the substrate and arranged in stack form in accordance with the axis (x) of the plane (x, y) of the device.

**8.** Device according to one of the preceding claims, at least one of the first, mobile lenses being a Fresnel lens.

**9.** Device according to one of the claims 1 to 8, at least one of the first or second lens (116) being a divergent lens.

10. Device according to one of the claims 1 to 9, the cylindrical lens having a diopter, whose cross-section in a plane perpendicular to the cylindrical symmetry axis is circular, conic or quadric.

11. Device according to one of the claims 1 to 10, the substrate of the device having means (10, 20, 21) for directing a light beam in the direction of the or a first mobile lens or the or a second lens.

12. Device according to claim 11, the means for directing a light beam incorporating an optical microguide (10) integrated into the substrate and having an exit end positioned facing the or a first mobile lens (4) or the or a second lens.

13. Device according to claim 11, the means for directing the light beam incorporating an optical fibre (20) fixed to the substrate and having an exit end positioned facing the or a first mobile lens or the or a second lens.

14. Device according to one of the claims 1 to 10, a laser diode or a microlaser (32) being fixed in the substrate, in such a way that the laser beam is emitted in the direction of the or a first mobile lens or the or a second lens.

15. Device according to one of the claims 1 to 13, the fastening arm (96) having two ends (98, 100) connected to the substrate (102) of the device and an intermediate portion, to which is connected at least one of the mobile lenses (99), said intermediate portion having an adequate flexibility to permit the mobility of the lens in the plane of the device.

16. Device according to one of the claims 1 to 15, having means (26-1, 26-2 26-3, 26-4, 28-1, 28-2, 28-3, 28-4, 84) for controlling the displacements of the fastening arm of at least one of the mobile lenses.

17. Device according to claim 16, the control means being of the electrostatic or electromagnetic type.

18. Device according to claim 16, the control means incorporating an electrostatic comb (84).

FIG.1A

EP 0 802 439 B1

FIG. 1B

FIG. 2

FIG. 3

FIG. 4

FIG. 5

FIG. 6

FIG. 7

FIG. 8

94.1

90.1

93

90.2

94.2

84

90.3

94.3

92

86

90.4

FIG. 9

88

102   106   108

98

100

96

104

99

FIG. 10

FIG. 11

FIG. 12